# EUROPEAN PATENT SPECIFICATION

(11) **EP 4 159 025 B1**
(45) Date of publication and mention of the grant of the patent: **03.01.2024**
(21) Application number: 21199864.6
(22) Date of filing: 29.09.2021
(51) Int. Cl.: A01D 46/26

(54) **SHAKING DEVICE**
SCHÜTTLER
DISPOSITIF SECOUEUR

(43) Date of publication of application: 05.04.2023
(73) Proprietor: Yamabiko Corporation, Ohme-shi, Tokyo 198-8760 (JP)
(72) Inventor: KAWAMURA, Kunimune, Tokyo, 198-8760 (JP)
(74) Representative: Flügel Preissner Schober Seidel

(56) References cited:
- EP-A1- 2 042 020
- EP-A1- 2 625 948
- WO-A1-03/100231

## Description

### TECHNICAL FIELD

The present invention relates to a shaking device having a reciprocating pole and a contacting part, such as a hook or pusher, which is configured to engage a branch, such as an olive branch, for shaking it to drop, for example, olives.

### BACKGROUND ART

EP 2 042 020 B1 discloses a shaking device having a reciprocating pole and a hook which is configured to engage a branch for shaking it to drop, for example, olives. This shaking device has a main rotation shaft, a driven shaft which is offset from the main rotation shaft and rotated in an opposite rotational direction to the main rotation shaft, a first counterweight fixed to the main rotation shaft, and a second counterweight fixed to the driven shaft. The first counterweight and the second counterweight are positioned in a backward position when the pole is in a forward position.

EP 2 625 948 B1 also discloses a shaking device having a reciprocating pole and a hook which is configured to engage a branch for shaking it to drop, for example, olives. This shaking device has a main rotation shaft with a first flywheel, a sleeve with a second flywheel rotatably disposed around the main rotation shaft and rotated in an opposite rotational direction to the main rotation shaft, a first counterweight fixed to the first flywheel, and a second counterweight fixed to the second flywheel. The first counterweight and the second counterweight are positioned in a backward position when the pole is in a forward position.

In each of these shaking devices, when the pole reaches the forward position, a shock in a direction from a forward side toward a backward side is transferred to an operator. However, since the first and second counterweights simultaneously reach the backward positions, such a shock transferred to the operator can be reduced. Similarly, when the pole reaches a backward position, a shock in a direction from the backward side toward the forward side is transferred to the operator. However, since the first and second counterweights simultaneously reach their forward positions, such a shock transferred to the operator can be reduced.

Further, when the pole reaches an intermediate position while it moves from the forward position to the backward position, the first counterweight causes, for example, a downward force, while the second counterweight causes, for example, an upward force. Similarly, when the pole reaches the opposite intermediate position while it moves from the backward position to the forward position, the first counterweight causes, for example, an upward force, while the second counterweight causes, for example, a downward force. As a result, such downward and upward forces are at least partially cancelled so that a shock transferred to the operator caused by these upward and downward forces can be reduced.

In the shaking device disclosed in EP 2 042 020 B1, the main rotation shaft and the driven shaft are offset from each other in an offset or vertical direction, a size of a case of the shaking device is enlarged in the vertical direction, for example, by a size of one gear between these shafts. An operator must hold a handle disposed on a top of the enlarged case to operate the shaking device. Namely, the operator holds the handles disposed away from a shaking part of the shaking device in the vertical direction so that the operator feels worse operability and the heavier weight of the shaking device than another type of shaking device. In the shaking device disclosed in EP 2 625 948 B1, the main rotation shaft and the sleeve are coaxial to each other so that a size of a case of the shaking device is relatively small.

On the other hand, in EP 2 625 948 B1, when the pole reaches the intermediate position, the downward and upward forces may cause, for example, a counterclockwise twisting force around an axis of the pole. Similarly, when the pole reaches the opposite intermediate position, the upward and downward forces may cause, for example, a clockwise twisting force around an axis of the pole. Namely, the counterclockwise and clockwise twisting forces are repeatedly and alternately caused. These twisting forces may be transferred to the operator via the flywheels, the main rotation shaft and the case, and give an adverse effect to an operability of the shaking device. Further, these twisting forces may give an adverse effect to a mating relationship between a beveled pinion and beveled gears in the first and second flywheels so that unstable rotations of the first and second flywheels are caused.

Thus, it is an object of the present invention to provide an improved shaking device in which the case of the shaking device is relatively small in the vertical and left-to-right directions with respect to the operator and the twisting forces can be reduced.

### SUMMARY OF THE INVENTION

In order to achieve the object, the present invention provides a shaking device which includes a driving shaft which is driven by an engine and has a pinion; a crankshaft unit driven by the pinion of the driving shaft; a connecting rod; and a pole having a contacting part at a forward end of the pole, the pole being reciprocated between a forward position and a backward position along a reciprocating axis by the crankshaft unit via the connecting rod; wherein the crankshaft unit includes a crankshaft portion engaging the connecting rod, and a reverse-rotation portion; wherein the crankshaft portion includes a first flywheel driven by the pinion to rotate in a first rotational direction, and at least one normal-rotation counterweight; wherein the reverse-rotation portion includes a second flywheel driven by the pinion to rotate in a second rotational direction opposed to the first rotational direction, and at least one reverse-rotation counterweight; wherein the first flywheel is disposed on a first side of the reciprocating axis, while the second flywheel and the at least one reverse-rotation counterweight are disposed on a second side of the reciprocating axis opposite to the first side; and wherein the at least one normal-rotation counterweight and the at least one reverse-rotation counterweight are arranged so as to be positioned in a backward position when the pole is in the forward position and so as to be positioned in a forward position when the pole is in the backward position; characterized in that the at least one normal-rotation counterweight includes at least one first normal-rotation counterweight arranged on the first side of the reciprocating axis and at least one second normal-rotation counterweight arranged on the second side of the reciprocating axis, and the at least one reverse-rotation counterweight is arranged between the at least one first normal-rotation counterweight and the at least one second normal-rotation counterweight.

In this shaking device, the crankshaft portion and the reverse rotation portion forms a crankshaft unit so that a size of the case of the shaking device is relatively small in the vertical and left-to-right directions with respect to the operator. Further, the twisting force caused by the at least one first normal-rotation counterweight and the at least one reverse-rotation counterweight can be reduced by adding the at least one second normal-rotation counterweight. Thus, the operability of the shaking device can be more enhanced than the shaking device disclosed in EP 2 625 948 B1. Also, the mating relationship between the pinion and the first and second flywheels can be improved so that the rotations of the first and second flywheels are more stable than those in the shaking device disclosed in EP 2 625 948 B1.

In an embodiment of the present invention, preferably, a total weight of the at least one first normal-rotation counterweight disposed on the first side of the reciprocating axis is different from a total weight of the at least one second normal-rotation counterweight and the at least one reverse-rotation counterweight on the second side of the reciprocating axis. Alternatively, a total weight of the at least one first normal-rotation counterweight and the at least one second normal-rotation counterweight may be different from a total weight of the at least one reverse-rotation counterweight.

In this shaking device, by adjusting distribution of the weights of the at least on first normal-rotation weight, the reverse-rotation counterweight, and the at least one second normal-rotation weight, the twisting force can be reduced effectively. Further, by appropriately determining the arrangement, the number, and the distance from the reciprocating axis of each of these counterweights, both of the compact size of the case and the reduced twisting force can be achieved at the same time.

In an embodiment of the present invention, preferably, the at least one first normal-rotation counterweight is disposed nearer to the reciprocating axis than the first flywheel, the at least one reverse-rotation counterweight is disposed nearer to the reciprocating axis than the second flywheel, and the at least one second normal-rotation counterweight is disposed farther from the reciprocating axis than the second flywheel.

In this shaking device, by effectively utilize a space between the first flywheel and the second flywheel, the size of the case of the shaking device can be effectively made small. Also, the first normal-rotation counterweight and the reverse-rotation counterweight are positioned near the reciprocating axis so that the twisting force itself caused by these counterweights can be reduced and loads imparted to the crankshaft unit can be reduced.

In an embodiment of the present invention, preferably, a distance between the reciprocating axis and one of the at least one normal-rotation counterweight and the at least one reverse-rotation counterweight is smaller than a distance between the reciprocating axis and the first flywheel and a distance between the reciprocating axis and the second flywheel.

In this shaking device, since the distance between the reciprocating axis and one of the counterweights is smaller than the distance between the reciprocating axis and the one of the flywheels, the twisting force itself caused by the one of the counterweights can be reduced than that described in EP 2 625 948 B1. Thus, the operability of the shaking device can be enhanced with respect to the shaking device disclosed in EP 2 625 948 B1 and the rotations of the first and second flywheels are more stable than those in the shaking device disclosed in EP 2 625 948 B1.

### BRIEF DESCRIPTION OF THE DRAWINGS

Fig. 1 is a schematical front view of a shaking device according to an exemplary embodiment of the present invention.
Fig. 2 is a partial perspective view of the shaking device of Fig. 1.
Fig. 3 is a partial perspective view of the shaking device of Fig. 1 wherein a case is omitted.
Fig. 4 is a partial cross-sectional top view of the shaking device of Fig. 1.
Fig. 5 is an enlarged view of a portion of Fig. 4.
Fig. 6 is an exploded view of a crankshaft unit in the shaking device of Fig. 1.
Fig. 7 is a perspective view of a second flywheel and a reverse-rotation counterweight in the shaking device of Fig. 1.
Fig. 8 is a partial perspective view of the shaking device of Fig. 1 wherein a case and flywheels are omitted when the connecting rod is in a forward position.
Fig. 9 is a partial perspective view of the shaking device of Fig. 1 wherein a case and flywheels are omitted when the connecting rod is in an intermediate position.
Fig. 10 is a partial perspective view of the shaking device of Fig. 1 wherein a case and flywheels are omitted when the connecting rod is in a backward position.
Fig. 11 is a partial perspective view of the shaking device of Fig. 1 wherein a case and flywheels are omitted when the connecting rod is in another intermediate position.

### DESCRIPTION OF EMBODIMENTS

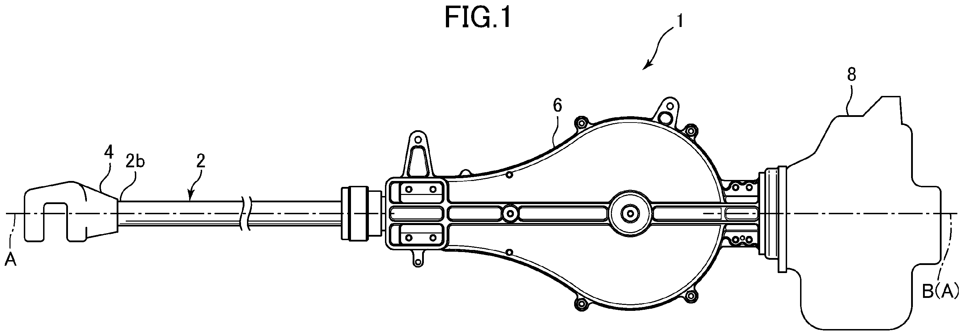

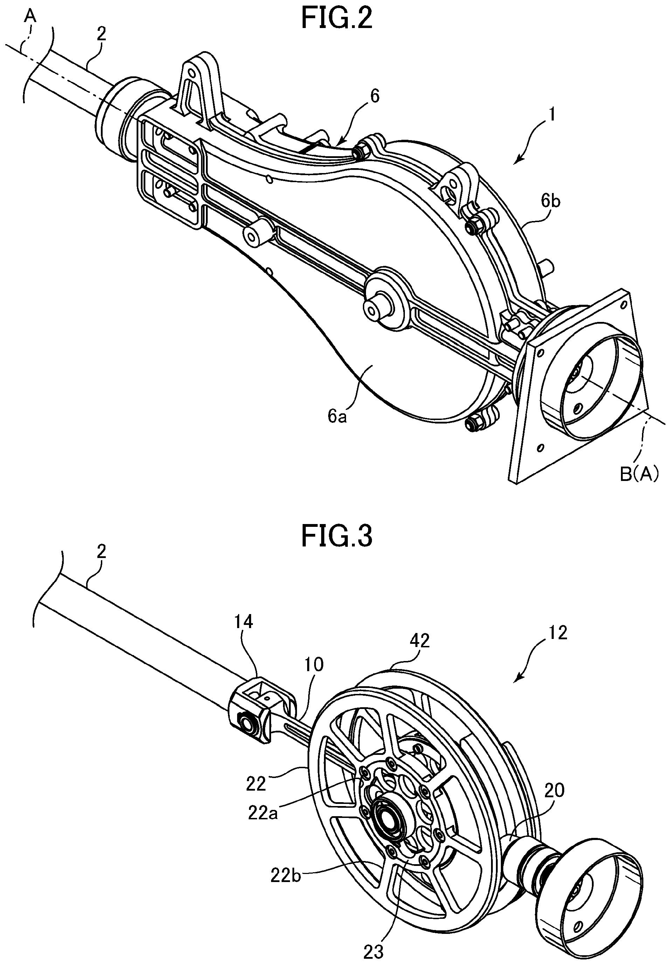

Referring to the drawings, a shaking device according to an exemplary embodiment of the present invention will be explained. As shown in Figs. 1 and 2, a shaking device 1 includes a pole 2, a case 6 from which the pole 2 extends, and an engine 8 attached to the case 6. The pole 2 has a contacting part 4, such as a hook or a pusher at a forward end 2b of the pole 2 and is linearly reciprocated along a reciprocating axis A with respect to the case 6. The contacting part 4 is configured to engage a branch, such as an olive branch, for shaking it to drop, for example, olives. The case 6 is flattened and has a first sidewall 6a disposed on a first side of the reciprocating axis A and a second sidewall 6b disposed on a second side of the reciprocating axis A opposite to the first side.

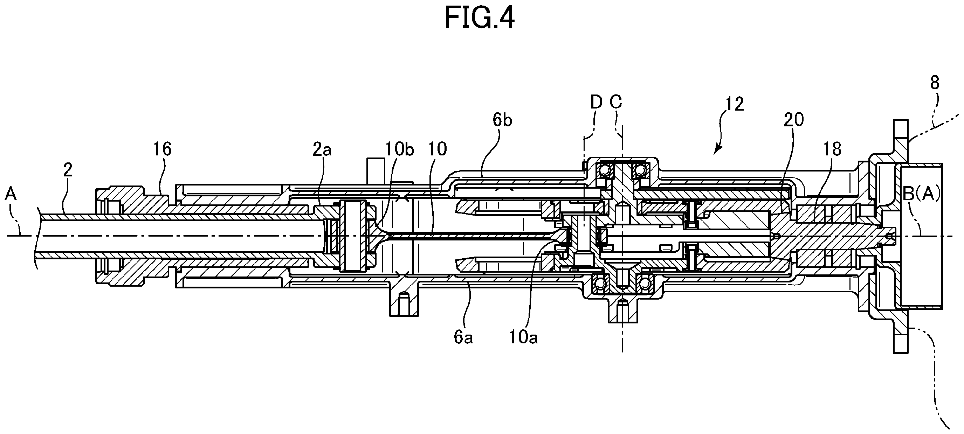

As shown in Figs. 3 and 4, the shaking device 1 also includes a driving shaft 18 which is driven by the engine 8 and has a beveled pinion 20, a crankshaft unit 12 driven by the pinion 20, and a connecting rod 10. The pole 2 is driven by the pinion 20 via the crankshaft unit 12 and the connecting rod 10. The driving shaft 18, the crankshaft unit 12 and the connecting rod 10 are housed in the case 6. The driving shaft 18 extends along a driving axis B which is preferably aligned with the reciprocating axis A.

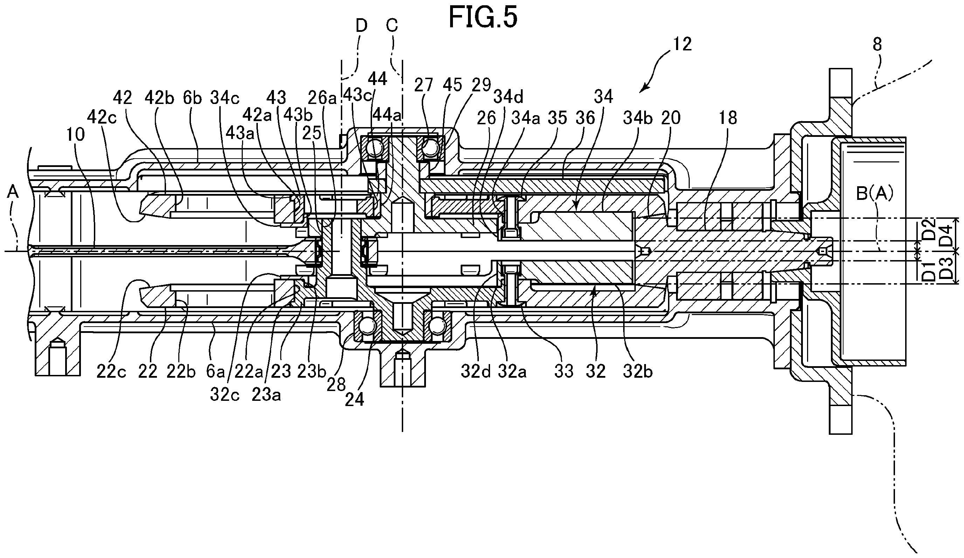

Referring to Fig. 5, the engine 8 is preferably an internal combustion engine, but it may be an electrical or pneumatic engine. The driving shaft 18 is connected to an output shaft (not shown) of the engine 8 via, for example, a centrifugal clutch (not shown). Thus, the driving shaft 18 is configured to be rotated by the engine 8 around the driving axis B.

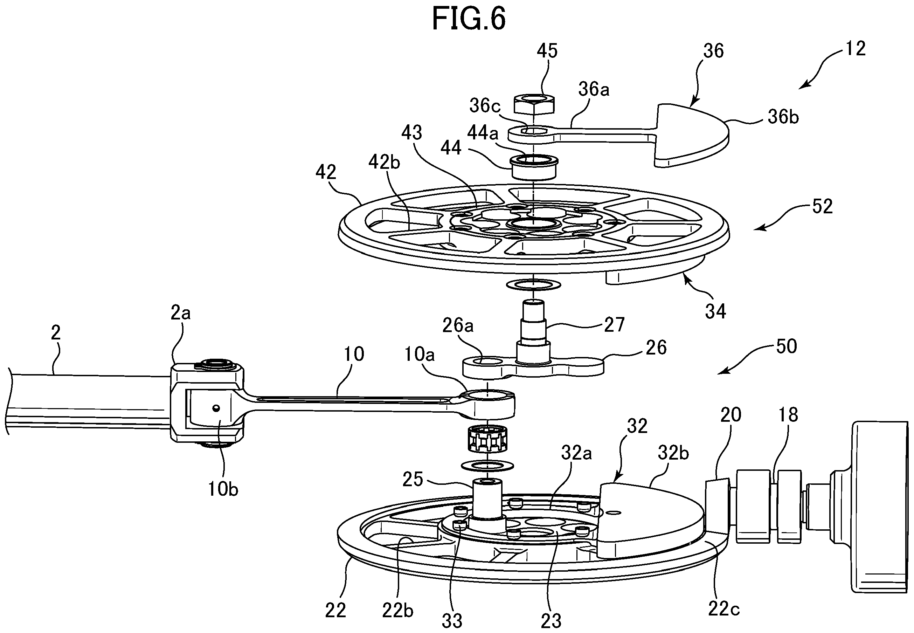

As shown in Figs. 5 and 6, the crankshaft unit 12 includes a crankshaft portion 50 engaging the connecting rod 10, and a reverse-rotation portion 52 explained later. The crankshaft portion 50 includes a first flywheel 22 driven by the pinion 20, a first central plate 23 which is preferably circular, a first rotation shaft 24 (not visible in Fig. 6), an offset shaft 25, a second central plate 26, and a second rotation shaft 27.

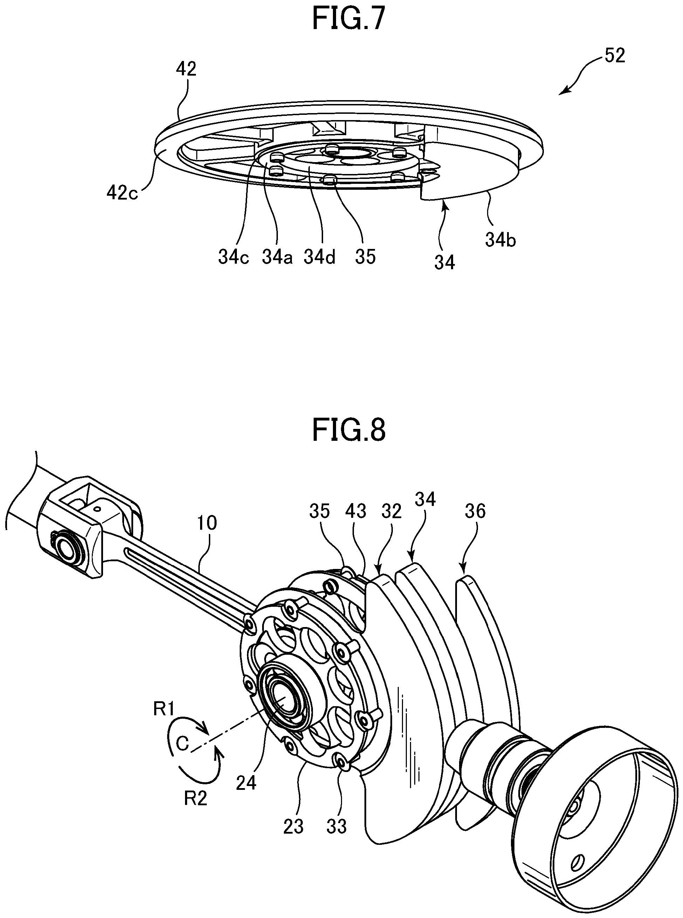

The first flywheel 22 has a disk-like shape and incorporates a peripheral beveled gear 22c which is configured to engage the beveled pinion 20 and faces toward the reciprocating axis A. Thus, the first flywheel 22 is configured to be driven by the pinion 20 to rotate around the rotation axis C in a first or normal rotational direction R1 (see Figs. 8-11). The first flywheel 22 includes a central aperture 22a into which the first central plate 23 is fitted from a side of the first flywheel 22 facing away from the reciprocating axis A, and a plurality of holes 22b arranged in a peripheral direction. Preferably, the first central plate 23 has an end flange 23a which is preferably positioned to be flush with the first flywheel 22, and a circular recess 23b on a side of the first central plate 23 facing toward the reciprocating axis A. The first flywheel 22 is located adjacent to the first sidewall 6a. The first rotation shaft 24 extends from the first central plate 23 toward the first sidewall 6a along a rotation axis C and is supported by a first bearing 28 attached to the first sidewall 6a so as to rotate around the rotation axis C. The offset shaft 25 extends from the first central plate 23 along an offset axis D which is parallel with and offset from the rotation axis C. Preferably, the first central plate 23, the first rotation shaft 24, and the offset shaft 25 are integrally formed.

The second central plate 26 has an elongated shape, preferably, symmetrical to the rotation axis C, and an aperture 26a into which the offset shaft 25 is press-fitted. The second rotation shaft 27 extends from the second central plate 26 toward the second sidewall 6b along the rotation axis C and supported by a second bearing 29 attached to the second sidewall 6b so as to rotate around the rotation axis C. Preferably, the second central plate 26 and the second rotation shaft 27 are integrally formed. The second rotation shaft 27 is coaxial with the first rotation shaft 24. Thus, the crankshaft portion 50 is configured to be rotated around the rotation axis C in the rotational direction R1. The second rotation shaft 27 is preferably longer than the first rotation shaft 24.

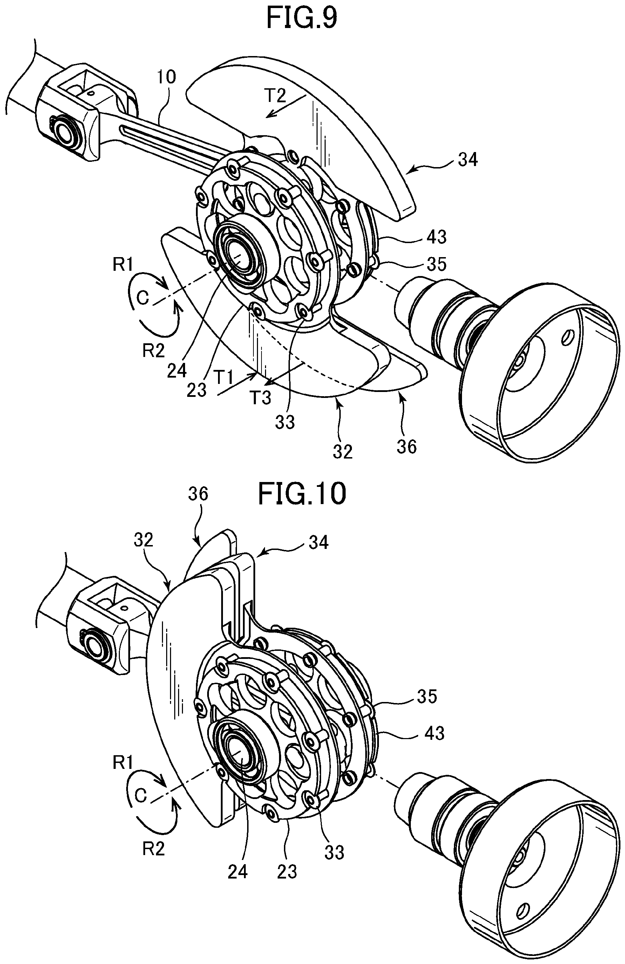

As shown in Figs. 4 and 6, the connecting rod 10 has a backward end 10a pivotally attached to the offset shaft 25, and a forward end 10b pivotally attached to a backward end 2a of the pole 2. The pole 2 is configured to be guided by a pole guide 16 fixed to the case 6 to linearly move the pole 2 along the reciprocating axis A. The pole 2 is configured to be reciprocated between a most-extended or forward position shown in Fig. 8 and a most-retracted or backward position shown in Fig. 10.

As shown in Fig. 6, the reverse-rotation portion 52 of the crankshaft unit 12 includes a second flywheel 42, a third central plate 43, and a sleeve 44. The sleeve 44 has a central aperture 44a which is rotatably fitted to the second rotation shaft 27. As shown in Fig. 5 and 6, the second flywheel 42 has a disk-like shape and incorporates a peripheral beveled gear 42c which is configured to engage the beveled pinion 20 and faces toward the reciprocating axis A. The second flywheel 42 is located opposite to the first flywheel 22 in a diametrical direction of the beveled pinion 20. Thus, the second flywheel 42 is configured to be driven by the pinion 20 to rotate around the rotation axis C in a second or reverse rotational direction R2 opposite to the first rotational direction R1 (see Figs. 8-11). The second flywheel 42 includes a central aperture 42a into which the third central plate 43 is fitted from a side of the second flywheel 42 facing away from the reciprocating axis A, and a plurality of holes 42b arranged in a peripheral direction. Preferably, the third central plate 43 has an end flange 43a which is preferably positioned to be flush with the second flywheel 42, and a circular recess 43b on a side of the third central plate 43 facing toward the reciprocating axis A. The third central plate 43 also has a central aperture 43c into which the sleeve 44 is press-fitted. The second flywheel 42 is located near the second sidewall 6b.

As shown in Fig. 6, the crankshaft portion 50 also includes a first normal-rotation counterweight 32 and a second normal rotation counterweight 36. Further, the reverse-rotation portion 52 also includes a reverse-rotation counterweight 34.

As shown in Figs 5 and 6, the first normal-rotation counterweight 32 has a ring portion 32a, and a flat weight portion 32b which has, for example, a sector shape. The ring portion 32a is fitted into the circular recess 23b of the first central plate 23 from a side of the first central plate 23 facing toward the reciprocating axis A The ring portion 32a has a thin flange 32c which abuts the first flywheel 22, and a central aperture 32d through which the offset shaft 25 extends. In a direction of the rotation axis C, a thickness of the ring portion 32a is smaller than a thickness of the weight portion 32b. The first flywheel 22 is sandwiched by the first central plate 23 and the ring portion 32a, and the first flywheel 22, the first central plate 23 and the ring portion 32a are secured to each other with a plurality of rivets 33. The rivets 33 neither extend over the end flange 23a of the first central plate 23 nor the weight portion 32b of the first normal-rotation counterweight 32. The size and shape of the weight portion 32b is preferably determined so that a clearance between the weight portion 32b and the connecting rod 10 is small. Thus, a space between the first and second flywheels 22, 42 can be effectively utilized so that when the first normal-rotation counterweight 32 is additionally provided, a thickness of the case 6 in the direction of the rotation axis C does not become large. Also, the twisting force caused by the first normal-rotation counterweight 32 with respect to the reciprocating axis A becomes small, because a distance between the reciprocating axis A and the first normal-rotation counterweight 32 is small. Further, a clearance between the first flywheel and the fist sidewall 6a can be reduced due to the end flange 23a of the first central plate 23.

The second normal-rotation counterweight 36 is fixed to the second rotation shaft 27 and disposed farther from the reciprocating axis A than the second flywheel 42. The second normal-rotation counterweight 36 has a flat shape and is located adjacent to the second sidewall 6b. The second normal-rotation counterweight 36 has an elongated support portion 36a and a weight portion 36b having, for example, a semicircular-like or sector shape. The support portion 36a has an odd-shaped aperture 36c into which an odd-shaped portion of the second rotation shaft 27 is fixed by a nut 45. A clearance between the second normal-rotation counterweight 36 and the second sidewall 6b can be reduced due to the flat shape of the second normal-rotation counterweight 36.

As shown in Figs 5 and 7, the reverse-rotation counterweight 34 has a ring portion 34a, and a flat weight portion 34b which has, for example, a sector shape. The ring portion 34a is fitted into the circular recess 43b of the third central plate 43 from a side of the third central plate 43 facing toward the reciprocating axis A, The ring portion 34a has a thin flange 34c which abuts the second flywheel 42, and a central aperture 34d which receives the second central plate 26 so that the second central plate 26 does not interfere with the ring portion 34a. In the direction of the rotation axis C, a thickness of the ring portion 34a is smaller than a thickness of the weight portion 34b. The second flywheel 42 is sandwiched by the third central plate 43 and the ring portion 34a, and the second flywheel 42, the third central plate 43 and the ring portion 34a are secured to each other with a plurality of rivets 35. The rivets 35 neither extend over the end flange 43a of the third central plate 43 nor the weight portion 34b of the reverse-rotation counterweight 34. The shape of the weight portion 34b is determined so that a clearance between the weight portion 34b and the connecting rod 10 is small. Thus, the space between the first and second flywheels 22, 42 can be effectively utilized so that when the reverse-rotation counterweight 34 is additionally provided, the thickness of the case 6 in the direction of the rotation axis C does not become large. Also, the twisting force caused by the reverse-rotation counterweight 34 with respect to the reciprocating axis A becomes small, because a distance between the reciprocating axis A and the reverse-rotation counterweight 32 is small. Further, a clearance between the second flywheel 42 and the second normal-rotation counterweight 36 can be reduced due to the end flange 43a of the third central plate 43a and the flat shape of the second normal-rotation counterweight 36.

The weight portions 32b, 34b, 36b of the normal-rotation counterweights 32, 36 and the reverse-rotation counterweight 34 are arranged so as to be positioned in a backward position as shown in Fig. 8 when the pole 2 is in the forward position and so as to be positioned in a forward position as shown in Fig. 10 when the pole 2 is in the backward position.

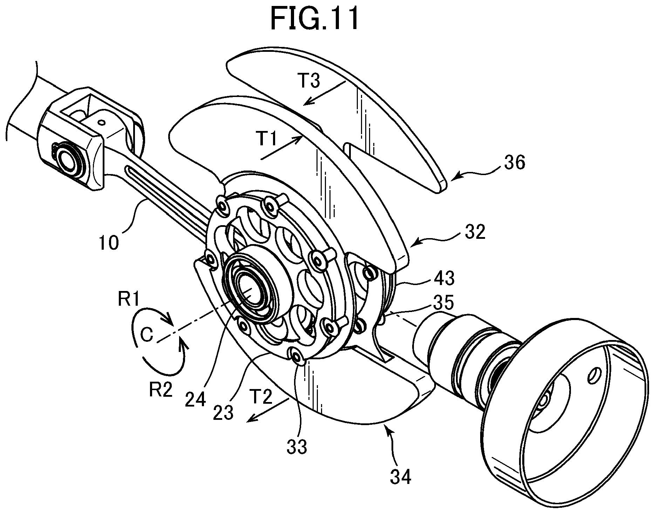

As shown in Fig. 9, when the pole 2 is in an intermediate position on the way from the forward position to the backward position, the weight portions 32b, 36b of the normal-rotation counterweights 32, 36 are positioned in a downward position, while the weight portion 34b of the reverse-rotation counterweight 34 is positioned in an upward position. Similarly, as shown in Fig. 11, when the pole 2 is in an intermediate position on the way from the backward position to the forward position, the weight portions 32b, 36b the normal-rotation counterweights 32, 36 are positioned in an upward position, while the weight portion 34b the reverse-rotation counterweight 34 is positioned in a downward position.

As described above, the first normal-rotation counterweight 32 is arranged on the first side of the reciprocating axis A, while the reverse-rotation counterweight 34 and the second normal-rotation counterweight 36 are arranged on the second side of the reciprocating axis A. Further, the reverse-rotation counterweight 34 is arranged between the first normal-rotation counterweight 32 and the second normal-rotation counterweight 36. The first normal-rotation counterweight 32 is attached to the first flywheel 22 and disposed nearer to the reciprocating axis A than the first flywheel 22. Namely, a distance D 1 between the reciprocating axis A and the first normal-rotation counterweight 32 is smaller than a distance D3 between the reciprocating axis A and the beveled gear 22c of the second flywheel 42. Similarly, the reverse-rotation counterweight 34 is attached to the second flywheel 42 and disposed nearer to the reciprocating axis A than the second flywheel 42. Namely, a distance D2 between the reciprocating axis A and the reverse-rotation counterweight 34 is smaller than a distance D4 between the reciprocating axis A and the beveled gear 42c of the second flywheel 42.

Preferably, a total weight of the first normal-rotation counterweight 32 disposed on the first side of the reciprocating axis Ais different from a total weight of the second normal-rotation counterweight 36 and the reverse-rotation counterweight 34 disposed on the second side of the reciprocating axis A so that the twisting force can be adjusted to be reduced effectively. However, the former total weight may be the same as the latter total weight. Alternatively, a total weight of the first and second normal-rotation counterweights 32, 36 may be different from a total weight of the reverse-rotation counterweight 34 so that the twisting force can be adjusted to be reduced effectively. However, the former total weight may be the same as the latter total weight.

An operation of the shaking device will be explained.

The driving shaft 18 is rotated by the engine 8 via the output shaft (not shown) of the engine 8 and the centrifugal clutch (nor shown). The first flywheel 22 is rotated by the beveled pinion 20 around the rotation axis C in the rotational direction R1 while the second flywheel 42 is rotated by the beveled pinion 20 around the rotation axis C in the rotational direction R2 opposite to the first rotational direction R1 at the same rotational speed as the first flywheel 22. The direction of the rotation axis C is a left-to-right direction with respect to an operator.

The offset shaft 25 is rotated together with the first flywheel 22 so that the pole 2 is linearly reciprocated along the reciprocating axis A via the connecting rod 10. The reciprocating action of the pole 2 allows the contacting part 4 to fall, for example, olives.

As shown in Fig. 8, when the pole 2 reaches the forward position, a shock in a direction from a forward side toward a backward side is transferred to the operator. However, since the counterweights 32, 34, 36 simultaneously reach the backward position, such a shock transferred to the operator can be reduced.

As shown in Fig. 9, when the pole 2 reaches the intermediate position while it moves from the forward position to the backward position, the normal-rotation counterweights 32, 36 causes a downward force to the operator, while the reverse-rotation counterweight 34 causes an upward force to the operator. As a result, such downward and upward forces are at least partially cancelled.

As shown in Fig. 10, when the pole 2 reaches the backward position, a shock in a direction from the backward side toward the forward side is transferred to the operator. However, since the counterweights 32, 34, 36 simultaneously reach the forward position, such a backward shock transferred to the operator can be reduced.

As shown in Fig. 11, when the pole 2 reaches the intermediate position while it moves from the backward position to the forward position, the normal-rotation counterweights 32, 36 causes an upward force to the operator, while the reverse counterweight 34 causes a downward force to the operator. As a result, such upward and downward forces are at least partially cancelled.

In the shaking device 1, the crankshaft portion 50 and the reverse rotation portion 52 forms a crankshaft unit 12 so that a size of the case 6 of the shaking device 1 is relatively small. Further, the twisting force caused by the first normal-rotation counterweight 32 and the reverse-rotation counterweight 34 can be reduced by adding the second normal-rotation counterweight 36. Specifically, as shown in Figs. 9 and 11, the twisting force T1 caused by first normal-rotation counterweight 32 and the twisting force T2 caused by the reverse-rotation counterweight 34 have the same direction (for example, counterclockwise as shown in Fig. 9) with respect to the reciprocating axis A. On the other hand, the twisting force T3 caused by the second normal-rotation counterweight 36 has the opposite direction (for example, clockwise as shown in Fig. 9) with respect to the reciprocating axis A. Thus, the operability of the shaking device 1 can be enhanced with respect to the shaking device disclosed in EP 2 625 948 B1. Also, the mating relationship between the pinion 20 and the beveled gears 22c, 42c of the first and second flywheels 22, 42 can be improved so that the rotations of the first and second flywheels 22, 42 are more stable than those in the shaking device disclosed in EP 2 625 948 B 1.

In order to reduce the twisting force itself caused by the first normal-rotation counterweight 32 or the reverse-rotation counterweight 34 around the reciprocating axis A, the counterweight 32, 34 is preferably positioned near the reciprocating axis A. Further, by positioning the counterweights 32, 34 near the reciprocating axis A, a size or thickness (in the direction along the rotation axis C) of the case 6 can be reduced.

The size or weight of the second normal-rotation counterweight 36 may be small because the distance between the second normal-rotation counterweight 36 and the reciprocating axis A is larger than the distance between the reverse-rotation counterweight 34 and the reciprocating axis A. Thus, the second rotation shaft 27 to which the second normal-rotation counterweight 36 is fixed is not required to be enlarged much. Also, the case 6 enclosing the second normal-rotation counterweight 36 is not required to be enlarged much. As a result, the twisting force can be reduced, while the thickness of the case 6 is not enlarged much.

In an example 1 in which the weights of the counterweight 32 and the counterweight 34 are the same and counterweights 32, 34 are positioned near the reciprocating axis A, a relatively small counterweight 36 can effectively reduce the twisting force caused by the counterweights 32, 34 without increasing the vertical shock largely.

In an example 2 in which the weight of the counterweight 34 is smaller than the counterweight 32, while the counterweight 36 is smaller than the counterweight 34 so that the weight of the counterweight 36 is the same as the difference between the weight of the counterweight 32 and the weight of the counterweight 34, a relatively small counterweight 36 can effectively reduce the twisting force caused by the counterweights 32, 34 without increasing the vertical shock largely. As an example 3, the weight of the counterweight 34 may be smaller so that the weight of the counterweight 36 is smaller than the difference between the weight of the counterweight 32 and the weight of the counterweight 34.

In an example 4 in which the weight of the counterweight 32 is smaller than the counterweight 34, while the counterweight 36 is smaller than the counterweight 32 so that the weight of the counterweight 36 is the same as the difference between the weight of the counterweight 32 and the weight of the counterweight 34, a relatively small counterweight 36 can also effectively reduce the twisting force caused by the counterweights 32, 34 without increasing the vertical shock largely. As an example 5, the weight of the counterweight 32 may be smaller so that the weight of the counterweight 36 is smaller than the difference between the weight of the counterweight 32 and the weight of the counterweight 34.

A total weight of the counterweight 32 disposed on the first side of the reciprocating axis A is different from a total weight of the counterweights 34, 36 on the second side of the reciprocating axis A in the examples 1, 3 and 5. A total weight of the normal-rotation counterweights 32, 36 is different from a total weight of the reverse-rotation counterweight 34 is different in the examples 1-3 and 5.

The number, a shape, a size and a position of the counterweights 32, 34, 36 can be appropriately modified. For example, the first normal-rotation counterweights 32 may be disposed nearer to or farther from the reciprocating axis A than the first flywheel 22. The first normal-rotation counterweights 32 may be attached to the first flywheel 22 or the first rotation shaft 24. The reverse- rotation counterweights 34 may be disposed nearer to or farther from the reciprocating axis A than the second flywheel 42. All counterweights 32, 34, 36 may have the same weight and the same size.

## Claims

1. A shaking device (1) comprising:
a driving shaft (18) which is driven by an engine (8) and has a pinion (20);
a crankshaft unit (12) driven by the pinion (20) of the driving shaft (18);
a connecting rod (10); and
a pole (2) having a contacting part (4) at a forward end of the pole (2), the pole (2) being reciprocated between a forward position and a backward position along a reciprocating axis (A) by the crankshaft unit (12) via the connecting rod (10);
wherein the crankshaft unit (12) includes a crankshaft portion (50) engaging the connecting rod (10), and a reverse-rotation portion (52);
wherein the crankshaft portion (50) includes a first flywheel (22) driven by the pinion (20) to rotate in a first rotational direction (R1), and at least one normal-rotation counterweight (32, 36);
wherein the reverse-rotation portion (52) includes a second flywheel (42) driven by the pinion (20) to rotate in a second rotational direction (R2) opposed to the first rotational direction (R1), and at least one reverse-rotation counterweight (34);
wherein the first flywheel (22) is disposed on a first side of the reciprocating axis (A), while the second flywheel (42) and the at least one reverse-rotation counterweight (34) are disposed on a second side of the reciprocating axis (A) opposite to the first side; and
wherein the at least one normal-rotation counterweights (32, 36) and the at least one reverse-rotation counterweight (34) are arranged so as to be positioned at a backward position when the pole (2) is in the forward position and so as to be positioned at a forward position when the pole (2) is in the backward position;
**characterized in**
**that** the at least one normal-rotation counterweight (32, 36) includes at least one first normal-rotation counterweight (32) arranged on the first side of the reciprocating axis (A) and at least one second normal-rotation counterweight (36) arranged on the second side of the reciprocating axis (A), and
the at least one reverse-rotation counterweight (34) is arranged between the at least one first normal-rotation counterweight (32) and the at least one second normal-rotation counterweight (36).

2. The shaking device (1) according to the claim 1,
wherein a total weight of the at least one first normal-rotation counterweight (32) disposed on the first side of the reciprocating axis (A) is different from a total weight of the at least one second normal-rotation counterweight (36) and, the at least one reverse-rotation counterweight (34) on the second side of the reciprocating axis (A).

3. The shaking device (1) according to the claim 1,
wherein a total weight of the at least one first normal-rotation counterweight (32) and the at least one second normal-rotation counterweight (36) is different from a total weight of the at least one reverse-rotation counterweight (34).

4. The shaking device (1) according to any one of the claims 1 to 3,
wherein the at least one first normal-rotation counterweight (32) is disposed nearer to the reciprocating axis (A) than the first flywheel (22), the at least one reverse-rotation counterweight (34) is disposed nearer to the reciprocating axis (A) than the second flywheel (42), and the at least one second normal-rotation counterweight (36) is disposed farther from the reciprocating axis (A) than the second flywheel (42).

5. The shaking device (1) according to any one of the claims 1-4,
wherein a distance between the reciprocating axis (A) and one of the at least one normal-rotation counterweight (32, 36) and the at least one reverse-rotation counterweight (34) is smaller than a distance between the reciprocating axis (A) and the first flywheel (22) and a distance between the reciprocating axis (A) and the second flywheel (42).

## Patentansprüche

1. Schüttelvorrichtung (1), umfassend:
eine Antriebswelle (18), die von einem Motor (8) angetrieben wird und ein Ritzel (20) aufweist;
eine Kurbelwelleneinheit (12), die von dem Ritzel (20) der Antriebswelle (18) angetrieben wird;
eine Verbindungsstange (10); und
eine Stange (2) mit einem Kontaktteil (4) an einem vorderen Ende der Stange (2), wobei die Stange (2) von der Kurbelwelleneinheit (12) über die Verbindungsstange (10) zwischen einer vorderen Position und einer hinteren Position entlang einer Hin- und Herbewegungsachse (A) hin- und herbewegt wird;
wobei die Kurbelwelleneinheit (12) einen Kurbelwellenabschnitt (50), der mit der Verbindungsstange (10) in Eingriff steht, und einen Rückwärtsdrehungsabschnitt (52) aufweist;
wobei der Kurbelwellenabschnitt (50) ein erstes Schwungrad (22), das durch das Ritzel (20) angetrieben wird, um sich in einer ersten Drehrichtung (R1) zu drehen, und mindestens ein Normaldrehungs-Gegengewicht (32, 36) umfasst;
wobei der Rückwärtsdrehungsabschnitt (52) ein zweites Schwungrad (42), das durch das Ritzel (20) angetrieben wird, um sich in einer zweiten Drehrichtung (R2) zu drehen, die der ersten Drehrichtung (R1) entgegengesetzt ist, und mindestens ein Rückwärtsdrehungs-Gegengewicht (34) umfasst;
wobei das erste Schwungrad (22) auf einer ersten Seite der Hin- und Herbewegungsachse (A) angeordnet ist, während das zweite Schwungrad (42) und das mindestens eine Rückwärtsdrehungs-Gegengewicht (34) auf einer zweiten Seite der Hin- und Herbewegungsachse (A) gegenüber der ersten Seite angeordnet sind; und
wobei das mindestens eine Normaldrehungs-Gegengewicht (32, 36) und das mindestens eine Rückwärtsdrehungs-Gegengewicht (34) angeordnet sind, um in einer Rückwärtsposition positioniert zu sein, wenn sich die Stange (2) in der Vorwärtsposition befindet, und um in einer Vorwärtsposition positioniert zu sein, wenn sich die Stange (2) in der Rückwärtsposition befindet;
**dadurch gekennzeichnet**
**dass** das mindestens eine Normaldrehungs-Gegengewicht (32, 36) mindestens ein erstes Normaldrehungs-Gegengewicht (32), das auf der ersten Seite der Hin- und Herbewegungsachse (A) angeordnet ist, und mindestens ein zweites Normaldrehungs-Gegengewicht (36), das auf der zweiten Seite der Hin- und Herbewegungsachse (A) angeordnet ist, umfasst, und
das mindestens eine Rückwärtsdrehungs-Gegengewicht (34) zwischen dem mindestens einen ersten Normaldrehungs-Gegengewicht (32) und dem mindestens einen zweiten Normaldrehungs-Gegengewicht (36) angeordnet ist.

2. Schüttelvorrichtung (1) nach Anspruch 1,
bei welcher ein Gesamtgewicht des mindestens einen ersten Normaldrehungs-Gegengewichts (32), das auf der ersten Seite der Hin- und Herbewegungsachse (A) angeordnet ist, von einem Gesamtgewicht des mindestens einen zweiten Normaldrehungs-Gegengewichts (36) und des mindestens einen Rückwärtsdrehungs-Gegengewichts (34) auf der zweiten Seite der Hin- und Herbewegungsachse (A) verschieden ist.

3. Schüttelvorrichtung (1) nach Anspruch 1,
bei welcher sich das Gesamtgewicht des mindestens einen ersten Normaldrehungs-Gegengewichts (32) und des mindestens einen zweiten Normaldrehungs-Gegengewichts (36) von dem Gesamtgewicht des mindestens einen Rückwärtsdrehungs-Gegengewichts (34) unterscheidet.

4. Schüttelvorrichtung (1) nach einem der Ansprüche 1 bis 3,
bei welcher das mindestens eine erste Normaldrehungs-Gegengewicht (32) näher an der Hin- und Herbewegungsachse (A) als das erste Schwungrad (22) angeordnet ist, das mindestens eine Rückwärtsdrehungs-Gegengewicht (34) näher an der Hin- und Herbewegungsachse (A) als das zweite Schwungrad (42) angeordnet ist, und das mindestens eine zweite Normaldrehungs-Gegengewicht (36) weiter von der Hin- und Herbewegungsachse (A) entfernt als das zweite Schwungrad (42) angeordnet ist.

5. Schüttelvorrichtung (1) nach einem der Ansprüche 1-4,
wobei ein Abstand zwischen der Hin- und Herbewegungsachse (A) und einem von dem mindestens einen Normaldrehungs-Gegengewicht (32, 36) und dem mindestens einen Rückwärtsdrehungs-Gegengewicht (34) kleiner als ein Abstand zwischen der Hin- und Herbewegungsachse (A) und dem ersten Schwungrad (22) und ein Abstand zwischen der Hin- und Herbewegungsachse (A) und dem zweiten Schwungrad (42) ist.

## Revendications

1. Dispositif secoueur (1) comprenant
un arbre d'entraînement (18) entraîné par un moteur (8) et doté d'un pignon (20) ;
une unité de vilebrequin (12) entraînée par le pignon (20) de l'arbre d'entraînement (18) ;
une bielle (10) ; et
une tige (2) ayant une partie de contact (4) à une extrémité avant de la tige (2), la tige (2) étant déplacée en va-et-vient entre une position avant et une position arrière le long d'un axe de déplacement en va-et-vient (A) par l'unité de vilebrequin (12) par l'intermédiaire de la bielle (10) ;
dans lequel l'unité de vilebrequin (12) comprend une partie de vilebrequin (50) en prise avec la bielle (10), et une partie à rotation inverse (52);
la partie de vilebrequin (50) comprend un premier volant d'inertie (22) entraîné par le pignon (20) pour tourner dans une première direction de rotation (R1), et au moins un contrepoids à rotation normale (32, 36) ;
la partie à rotation inverse (52) comprend un second volant d'inertie (42) entraîné par le pignon (20) pour tourner dans une seconde direction de rotation (R2) opposée à la première direction de rotation (R1), et au moins un contrepoids à rotation inverse (34) ;
le premier volant d'inertie (22) est disposé sur un premier côté de l'axe de déplacement en va-et-vient (A), tandis que le second volant d'inertie (42) et au moins un contrepoids à rotation inverse (34) sont disposés sur un second côté de l'axe de déplacement en va-et-vient (A) opposé au premier côté ; et
ledit au moins un contrepoids à rotation normale (32, 36) et ledit au moins un contrepoids à rotation inverse (34) sont disposés de manière à être positionnés dans une position arrière lorsque la tige (2) est en position avant, et de manière à être positionnés dans la position avant lorsque la tige (2) est en position arrière ;
**caractérisé en ce que**
ledit au moins un contrepoids à rotation normale (32, 36) comprend au moins un premier contrepoids à rotation normale (32) disposé sur le premier côté de l'axe de de déplacement en va-et-vient (A) et au moins un second contrepoids à rotation normale (36) disposé sur le second côté de l'axe de déplacement en va-et-vient (A), et
ledit au moins un contrepoids à rotation inverse (34) est disposé entre ledit au moins un premier contrepoids à rotation normale (32) et ledit au moins un second contrepoids à rotation normale (36).

2. Dispositif secoueur (1) selon la revendication 1,
dans lequel le poids total dudit au moins un premier contrepoids à rotation normale (32) disposé sur le premier côté de l'axe de déplacement en va-et-vient (A) est différent du poids total dudit au moins un second contrepoids à rotation normale (36) et dudit au moins un contrepoids à rotation inverse (34) disposé sur le second côté de l'axe de déplacement en va-et-vient (A).

3. Dispositif secoueur (1) selon la revendication 1,
dans lequel le poids total dudit au moins un premier contrepoids à rotation normale (32) et dudit au moins un second contrepoids à rotation normale (36) est différent du poids total dudit au moins un contrepoids à rotation inverse (34).

4. Dispositif secoueur (1) selon l'une des revendications 1 à 3,
dans lequel ledit au moins un premier contrepoids à rotation normale (32) est disposé plus près de l'axe de déplacement en va-et-vient (A) que le premier volant d'inertie (22), ledit au moins un contrepoids à rotation inverse (34) est disposé plus près de l'axe de déplacement en va-et-vient (A) que le second volant d'inertie (42), et ledit au moins un second contrepoids à rotation normale (36) est disposé plus loin de l'axe de déplacement en va-et-vient (A) que le second volant d'inertie (42).

5. Dispositif secoueur (1) selon l'une des revendications 1 à 4,
dans lequel une distance entre l'axe de déplacement en va-et-vient (A) et l'un parmi ledit au moins un contrepoids à rotation normale (32, 36) et ledit au moins un contrepoids à rotation inverse (34) est inférieure à la distance entre l'axe de déplacement en va-et-vient (A) et le premier volant d'inertie (22) et à la distance entre l'axe de déplacement en va-et-vient (A) et le second volant d'inertie (42).
